# EUROPEAN PATENT APPLICATION

(11) **EP 2 541 932 A1**
(43) Date of publication of application: **02.01.2013**
(21) Application number: 11171617.1
(22) Date of filing: 28.06.2011
(51) Int. Cl.: H04N 7/18, H04N 17/00

(54) **Quality checking in video monitoring system.**

(71) Applicant: Axis AB, 223 69 Lund (SE)
(72) Inventor: Lundberg, Stefan, SE-224 56 Lund (SE)
(74) Representative: Valea AB

(57) **Abstract**

Performance control of a video monitoring system (100) is described. The system (100) comprises system units including at least one camera (114) and a performance control station (120). A method comprises providing, in the performance control station (120), a visual output signal. Image data that have been recorded by a first camera (114) are then obtained, and the obtained image data is analyzed in relation to the visual output signal. The analysis results in a performance indicator for the system (100). Depending on the performance indicator, a performance control action associated with the system (100) is then performed by the performance control station (120).

## Description

### Technical field

The present invention relates to controlling performance of a video monitoring system.

### Background

An often occurring problem during operation of a video monitoring systems is that when image data that has been recorded at a specific time is needed, e.g. for analysis of a suspected event at the scene of monitoring, it is found that no image data was recorded or that the quality of the data is too poor to be of use. Reasons for decreased quality of image data may be dirty or broken optical components as well as factors related to the monitoring system equipment having been tampered with so that it no longer is recording what it is suppose to record. Needless to say, such problems may be of very high importance. Depending on the environment in which the monitoring system is operating, high economic values and even human lives may depend on a fully functional system. A general problem is then how to ensure proper operation of units in a monitoring system.

Typical solutions in the prior art for detecting and reporting malfunction of a monitoring camera, such as loss of image, focus, color and alignment problems, involve the use of a reference image that has been recorded during installation and configuration of the camera. That is, the reference image is a recording of a scene that is to be the actual subject of monitoring. An example of such a prior art performance supervision of a CCTV system can be found in the international patent application publication WO 01/56294.

### Summary

In view of the problems discussed above in relation to video monitoring systems as discussed above, there is provided a method for controlling performance of a video monitoring system. The system comprises system units including at least one camera and a performance control station. The method comprises providing, in the performance control station, a visual output signal. Image data that have been recorded by a first camera are then obtained, and the obtained image data is analyzed in relation to the visual output signal. The analysis results in a performance indicator for the system. Depending on the performance indicator, a performance control action associated with the system is then performed by the performance control station.

Such a method enables detection of faulty system units by monitoring image quality for images recorded by a camera in a monitoring system. This is done by use of image analysis verifying that a predefined visual signal in the form of, e.g., a pattern placed within the field of view of a network camera, is correctly recorded. The verification is performed by a separate device in the form of a performance control station being independent from the camera and, if the camera does not retain the recorded images, any storage system where the images are stored.

It is to be noted that the concept of "video" in the present disclosure is to be interpreted as comprising both still images and streams of images, i.e. "moving images". Moreover, the concept of "visual signal" is to be interpreted from the point of view of a camera. That is, the visual output signal comprises electromagnetic radiation in a wavelength interval in which a detector in a camera is sensitive. The output signal is not necessarily visible to the naked eye of a human. This will be discussed further in the detailed description that will follow below.

The provision of the visual output signal may be performed between a first point in time and a second point in time, and the obtaining of image data may comprise obtaining image data recorded at a point in time after the first point in time and before the second point in time.

That is, as well as being a more or less passive sign, the performance control station may be more active by switching on the visual output signal at specific points in time. This provides flexibility and versatility in terms of when the visual signal is to be provided.

The analysis of the obtained image data in relation to the visual output signal may comprise comparing at least part of the obtained image data with the visual output signal, resulting in a value representing a difference between the obtained image data and the visual output signal. The performance indicator may then be set to a value depending on the value representing the difference.

In other words, some embodiments involve a procedure where part of an obtained image, for example a rectangle at a specified position in an image frame, is compared with the visual signal. The actual comparison algorithm may comprise more or less advanced image analysis steps, the details of which are outside the scope of the present disclosure. The comparison will result in a value that is an indicator of how the image correlates with the visual signal, and hence indicates whether or not there are faults in the camera from which the image is obtained. Such a procedure is simple and effective.

The performing of the performance control action may comprise providing an alarm signal as well as providing a camera adjustment signal for adjusting operational conditions in the first camera.

Such embodiments provide flexibility to provide different levels of supervision of a monitoring system. For example, an alarm signal may be provided that is conveyed to a user or operator of the system, who then may take appropriate action to correct any faults. It is also possible to automate any corrective action by sending the adjustment signal in addition to or instead of an alarm signal.

The provision of a visual output signal may comprise displaying a fixed spatial pattern as well as displaying a temporally varying spatial pattern.

That is, both non-moving and moving patterns can be used as visual output signals. This provides versatility in terms of which types of faults to identify. It allows, e.g., analysis of image resolution and color for the camera that is under consideration. Moreover, in cases where the visual output signal is a temporally varying spatial pattern and where the image data is a sequence of image frames, the analyzing of the received image data in relation to the visual output signal may comprise analyzing image frame rate for the camera.

The obtaining of image data and the analysis of the obtained image data in relation to the visual output signal may be performed in the performance control station. That is, all steps of the procedure may be performed by the performance control station.

However, some embodiments involve a system control station that co-operates with the performance control station. Such embodiments include sending, from the performance control station to a system control station, control signals for causing the system control station to perform the obtaining of image data and the analysis of the obtained image data in relation to the visual output signal, and receiving, in the performance control station, the performance indicator.

In these embodiments the processing intensive task of analyzing the image data is performed in a system control station, which typically has more processing resources than the performance control station. This in turn makes it possible to minimize the hardware and software requirements when implementing a performance control station, with resulting minimization of cost.

In a another aspect there is provided a performance control station for a video monitoring system, the system comprising system units including at least one camera and the performance control station. The performance control station comprises processing circuitry, communication circuitry and display circuitry configured to provide a visual output signal, obtain image data recorded by a first camera, analyze the received image data in relation to the visual output signal resulting in a performance indicator for the system, and perform, depending on the performance indicator, a performance control action associated with the system.

In yet another aspect there is provided a video monitoring system comprising a performance control station as summarized above and a plurality of video cameras. The system may comprise a system control station that comprises at least a part of the processing circuitry, communication circuitry and display circuitry of the performance control station.

In yet another aspect there is provided a computer program product comprising software instructions that, when executed in a processing unit, performs the method as summarized above.

These further aspects provide effects and advantages corresponding to those of the method as summarized above.

### Brief description of the drawings

Embodiments will now be described with reference to the attached drawings, where:
figure 1 schematically illustrates a video monitoring system,
figure 2 is a flowchart of a method for controlling performance of a video monitoring system such as the system in figure 1, and
figure 3 schematically illustrates a video monitoring system.

### Detailed description of embodiments

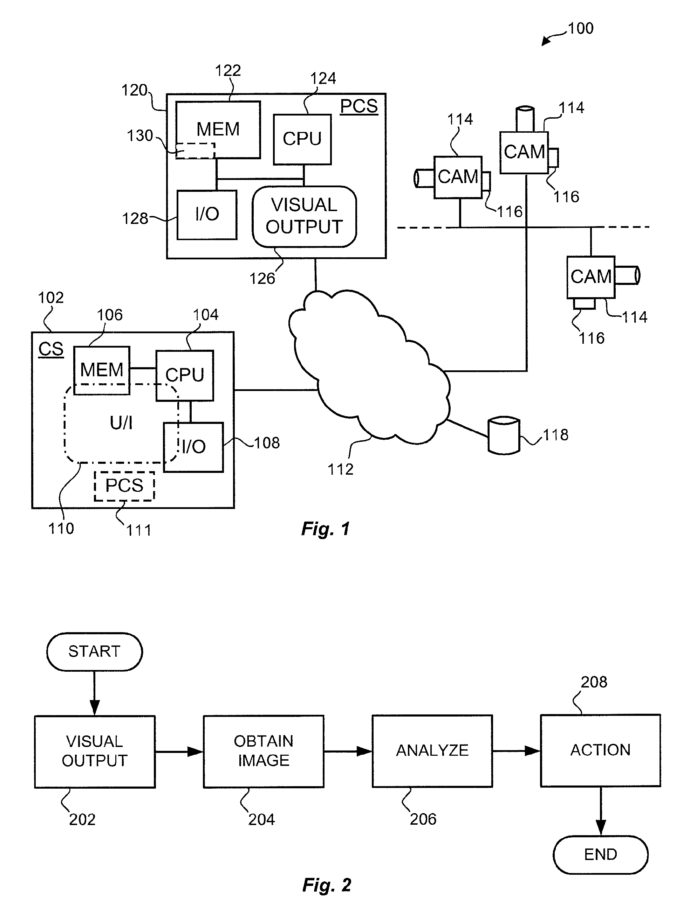

With reference to figure 1, a video monitoring system 100 comprises a control station 102, a performance control station 120, an image storage unit 118 and a number of digital video cameras 114 interconnected in a digital communication network 112.

The control station 102 comprises, from a hardware perspective, a processing unit 104, memory 106 and input/output circuitry 108. Software instructions stored in the memory 106 are configured to control the station 102 and its interaction with the system 100 and implement, when executed by the processor and in combination with the hardware units, a user interface 110. The user interface includes a display for displaying video data and other information to an operator. The skilled person will realize that the user interface 110 may include other input/output units, including keypads, keyboards, loudspeakers etc that enable an operator of the control unit 102 to interact with the monitoring system 100.

The network 112 is of a type suitable for communicating digital video data and signaling information between the control station 102 and the cameras 114. For example, the network 112 may be any combination of local area networks and wide area networks, wired as well as wireless, that are configured to convey digital data according to any suitable network protocols known in the art, such as the Internet Protocol (IP) suite and other telecommunication protocols, including any communication protocols established within the framework of 3GPP. Consequently, any of the communicating units 102, 120, 114 and 118 may be connected via wired as well as wireless communication means, such as Ethernet wired communication means and/or wireless means capable of communicating under any of the IEEE 802.11 set of standards and/or the 3GPP standards.

The cameras 114 may be any suitable digital camera capable of generating video data including still images and moving video sequences and communicating the video data, or other type of image data, such as image and video metadata, over the network 112 to the control station 102. The cameras 114 may comprise image storage memory 116 for storing a plurality of images. The cameras 114 comprise a lens system for collecting incident light, an image sensor, for example in the form of a Charge Coupled Device (CCD), a CMOS-sensor or similar sensor, for registering incident light in the visual and/or the infrared wavelength intervals, as well as circuitry as is known in the art (and therefore not illustrated in detail in figure 1). For example, the circuitry typically includes an image processing module (implemented in hardware, software, or any combination thereof), an image/video encoder, a processing unit that manages, for example video analytics, memory, and a network interface for connection to the network 112. The image/video encoder is arranged to encode captured digital image data into any one of a plurality of known formats for continuous video sequences, for limited video sequences, for still images or for streamed images/video. For instance, the image information may be encoded into MPEG1, MPEG2, MPEG4, H.264, JPEG, M-JPEG, bitmapped, etc.

The image storage unit 118 is also capable of communicating video sequences, or other type of image data, such as image and video metadata, over the network 112 with the control station 102 and the cameras 114. The image storage unit 118 may form a functional part of the control station 102 and also be completely integrated in the control station 102.

The performance control station 120 comprises a processing unit 124, memory 122 and input/output circuitry 128 for communicating via the network 112. Software instructions 130 stored in the memory 122 are configured to control the performance control station 120 and its interaction with the system 100 and implement, when executed by the processor 124 and in combination with the hardware units, the method as summarized above and described in more detail below. A visual output signal unit 126 is connected to the processor 124 and other hardware in the performance control station 120. Such a visual output signal unit 126 may be in the form of a two-dimensional display, or in other embodiments in the form of one or more light sources such as LED's and the like. The wavelengths at which the light sources operate may be in the visual part of the spectrum as well as in the infrared part of the spectrum. In some embodiments, the visual output signal unit 126 may even be a passive non-electronic unit, disconnected from any circuitry in the performance control station 120, which simply presents a fixed spatial pattern.

The image storage unit 118 and the performance control station 120 are typically configured to be under the control of the control station 102. However, alternative embodiments of a system may exclude the control station 102. Such systems comprise only cameras, one or more image storage units and at least one performance control station.

Yet alternative embodiments of a system may exclude the control station 102 and the image storage unit 118. Such systems comprise only cameras, having image storage capability, and at least one performance control station.

Furthermore, embodiments include those where the system control station 102 is configured to co-operate with the performance control station 120 in such a way that some functionality 111 of the performance control station 120 is located in the control station 102. In such embodiments the stations 102, 120 have circuitry configured to interact and specifically circuitry configured to send, from the performance control station 120 to the system control station 102, control signals for causing the system control station 102 to perform some of the steps of the method as summarized above.

Turning now to figure 2, a method in a system, such as the system 100 in figure 1, will be described in some detail. The method implements a method as summarized above and the situation at the commencement of the method is that a user of the system wants to introduce a way of ensuring that image data is correctly recorded. In order to avoid a situation in which the recorded image data is either unavailable or of no use due to quality deterioration, the user has arranged a performance control station, such as the performance control station 120 in figure 1, in the field of view of the camera that the user wishes to check. The camera is in operation and records and stores monitoring images according to an appropriate schedule, as controlled by a control station such as the control station 102 in figure 1. The user interacts directly with the performance control station or indirectly via the control station. The camera that the user wishes to check is controlled to focus on the visual output signal, e.g. a display on the performance control station.

In this embodiment, the recorded images are stored in image storage memory, such as the image storage memory 116, in the camera. The user has triggered the performance control station 120 to perform the method as follows.

The method commences with a visual output step 202 in which a visual output signal is provided by the performance control station 120. As already summarized, the visual output signal may be any suitable fixed or moving pattern. In fact, the visual output may even be in the form of a sequence of image frames making up a film, e.g. a commercial advertising film. Such sequences may be used, during the analysis that will follow, to ensure that a recording of the sequence is performed at a correct frame rate. Furthermore, additional security in such a procedure may be obtained by having a security pattern encoded into the sequence of images.

In an obtaining step 204 image data that has been recorded by the camera is obtained. Here, the image data is fetched from the image storage memory in the camera. In other embodiments where cameras store images in a serving image storage unit such as the storage unit 118 in figure 1, the fetching may take place from the storage unit. The obtaining of the image data from the camera involves signaling and exchange of information with the camera such that the image data relate to a point in time when the visual output signal was provided. The actual signaling sequences and content are outside the scope of the present disclosure.

It is to be noted that this timing aspect is not to be confused with how the method steps are scheduled. That is, the timing of the actual step of obtaining 204 is not necessarily in correlation with the timing of the recording of the image data in the camera. For example, the scheduling may be such that the performance control station obtains image data from the camera at irregular or regular points in time, such as once every day or once every week.

In an analysis step 206, the obtained image data is analyzed in relation to the visual output signal resulting in a performance indicator for the system. This analysis involves a number of sub-procedures and may involve more or less advanced image analysis algorithms. For example, data that define the visual output signal is transformed into a format that is comparable with the image data that was obtained in the obtaining step 204 and the transformed visual output signal is available in the performance control station. The actual transformation algorithm is however outside the scope of the present disclosure.

A comparison between the transformed visual output signal and the obtained image data will result in a value that represents a difference between the output signal and the recording via the camera. A performance indicator is then calculated that indicates how large the difference is. A simple calculation may entail setting the indicator to a binary value, where 0 may represent a satisfactory performance and a 1 may represent a situation in which there is a problem within the system, e.g. a camera or storage unit needs maintenance, a storage unit is full or not capable of storing due to other reasons, a system unit has been tampered with or is in need of adjusting etc. A more complex analysis step may involve detailed image analysis and a resulting performance indicator may contain more detailed information regarding the performance of the camera. For example, a measure of the quality of the image data in relation to the visual output signal can be established. The measure of quality may be in terms of resolution of the image data that indicates faulty focus or information relating to the color in the image data that indicates other optical deficiencies and in a case where streams of images are analyzed, frame rate for the recorded images may be the quality measure.

Depending on the performance indicator obtained in the analysis step 206, action is taken in an action step 208. The action may be, in a case where the performance indicator indicates a non-satisfactory performance such as a faulty camera, to provide an alarm signal or message to the user. In some embodiments, the action may be a more complex procedure and involve sending adjustment signals to the camera. For example, if a faulty focus is suspected due to an indicator indicating a low resolution, a focus setting command may be sent to the camera. In cases where faulty camera software is suspected, a simple restart command may be sent to the camera. In cases where the performance indicator indicates a satisfactory performance, the action may be more or less a dummy action.

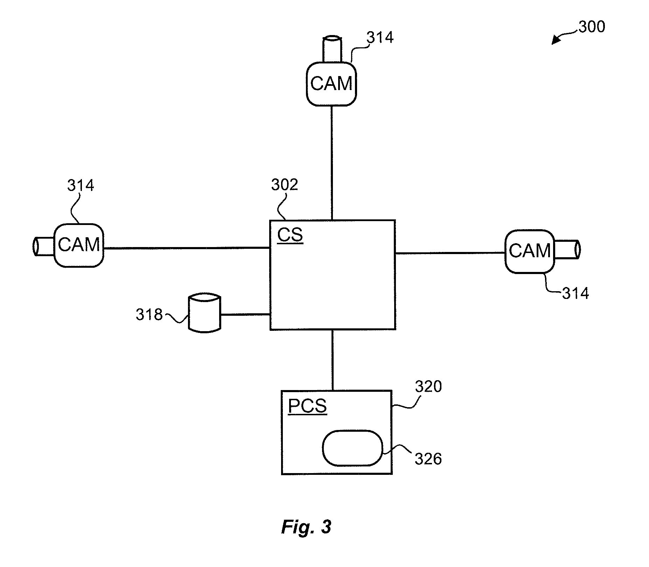

Turning now to figure 3, a video monitoring system 300 comprises a control station 302, a performance control station 320, an image storage unit 318 and a number of video cameras 314. In contrast to the system 100 described above in connection with figure 1, the cameras 314 are analog cameras and connected directly to the control station 302. The cameras 314 may be any suitable analogue camera capable of generating video data including still images and moving video sequences and communicating the data to the control station 302.

Similar to the control station in the system 100 in figure 1, the control station 302 comprises (although not shown in figure 3) a processing unit, memory and input/output circuitry. Software instructions stored in the memory are configured to control the station 302 and its interaction with the system 300 and implement, when executed by the processor and in combination with the hardware units, a user interface. The user interface includes a display for displaying video data and other information to an operator. The control station 302 is also capable of transforming analog data from the cameras 314 into digital form that is suitable for storage and processing according to the procedures described above in connection with figures 1 and 2.

Similarly, the performance control station 320 comprises a processing unit, memory and input/output circuitry for communicating with the control station 302. Software instructions stored in the memory are configured to control the performance control station 320 and its interaction with the system 300 and implement, when executed by the processor and in combination with the hardware units, the method as described above. As for the performance control station 120 in the system 100 in figure 1, a visual output signal unit 326 is included in the performance control station.

## Claims

1. A method for controlling performance of a video monitoring system (100, 300), said system comprising system units including at least one camera (114, 314) and a performance control station (120, 320), the method comprising:
- providing, in the performance control station, a visual output signal,
- obtaining image data recorded by a first camera,
- analyzing the obtained image data in relation to the visual output signal resulting in a performance indicator for the system, and
- performing, by the performance control station and depending on the performance indicator, a performance control action associated with the system.

2. The method of claim 1, wherein:
- the provision of the visual output signal is performed between a first point in time and a second point in time, and
- the obtaining of image data comprises obtaining image data recorded at a point in time after the first point in time and before the second point in time.

3. The method of claim 1 or 2, wherein the analysis of the obtained image data in relation to the visual output signal comprises:
- comparing at least part of the obtained image data with the visual output signal, resulting in a value representing a difference between the obtained image data and the visual output signal, and
- setting the performance indicator to a value depending on the value representing the difference.

4. The method of any of claims 1-3, wherein the performing of the performance control action comprises providing an alarm signal.

5. The method of any of claims 1-4, wherein the performing of the performance control action comprises providing a camera adjustment signal for adjusting operational conditions in the first camera.

6. The method of any of claims 1-5, wherein the providing of a visual output signal comprises displaying a fixed spatial pattern.

7. The method of any of claims 1-6, wherein the providing of a visual output signal comprises displaying a temporally varying spatial pattern.

8. The method of any of claims 1-7, wherein the analyzing of the received image data in relation to the visual output signal comprises analyzing any of image resolution and color.

9. The method of claim 7, wherein the image data is a sequence of image frames and wherein the analyzing of the received image data in relation to the visual output signal comprises analyzing image frame rate.

10. The method of any of claims 1-9, wherein the obtaining of image data and the analysis of the obtained image data in relation to the visual output signal are performed in the performance control station.

11. The method of any of claims 1-9, comprising:
- sending, from the performance control station to a system control station, control signals for causing the system control station to perform the obtaining of image data and the analysis of the obtained image data in relation to the visual output signal, and
- receiving, in the performance control station, the performance indicator.

12. A performance control station (120, 320) for a video monitoring system (100, 300), said system comprising system units including at least one camera (114, 314) and the performance control station, the performance control station comprising processing circuitry, communication circuitry and display circuitry configured to:
- provide a visual output signal,
- obtain image data recorded by a first camera,
- analyze the received image data in relation to the visual output signal resulting in a performance indicator for the system, and
- perform, depending on the performance indicator, a performance control action associated with the system.

13. A video monitoring system (100, 300) comprising a performance control station (120, 320) according to claim 13 and a plurality of video cameras (114, 314).

14. The system of claim 13, comprising a system control station (106, 306) that comprises at least a part of the processing circuitry, communication circuitry and display circuitry of the performance control station.

15. A computer program product (130) comprising software instructions that, when executed in a processing unit, performs the method according to any of claims 1 to 11.
